(19) Europäisches Patentamt / European Patent Office / Office européen des brevets

(11) **EP 4 510 769 A1**

(12) **EUROPEAN PATENT APPLICATION**
published in accordance with Art. 153(4) EPC

(43) Date of publication:
**19.02.2025 Bulletin 2025/08**

(21) Application number: **22936944.2**

(22) Date of filing: **15.04.2022**

(51) International Patent Classification (IPC):
**H04W 76/27** (2018.01) **H04W 76/28** (2018.01)

(52) Cooperative Patent Classification (CPC):
**H04W 76/27; H04W 76/28**

(86) International application number:
**PCT/CN2022/087088**

(87) International publication number:
**WO 2023/197299 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Quectel Wireless Solutions Co., Ltd.
Shanghai 201601 (CN)**

(72) Inventors:
• **LYU, Ling
  Shanghai 201601 (CN)**
• **ZHAO, Zheng
  Shanghai 201601 (CN)**

(74) Representative: **Richards, John
Ladas & Parry LLP
Temple Chambers
3-7 Temple Avenue
London EC4Y 0DA (GB)**

(54) **WIRELESS COMMUNICATION METHOD AND APPARATUS**

(57) This application provides a method and device for wireless communication that can reduce the power consumption of V2X transmitting devices. The method includes the following steps: The first device receives multiple pieces of first information, where each piece of first information corresponds to a different activation time. These multiple activation times represent the activation times of multiple second devices. The first device selects a target activation time from the received multiple activation times. Within the chosen target activation time, the first device transmits sidelink data on the time-frequency resources allocated for this purpose.

S710
The first device receives a plurality of first messages

S720
The first device selects the target activation time from a plurality of activation times

S730
The first device sends lateral data on the time frequency resources within the target activation time.

Figure 7

# EP 4 510 769 A1

## Description

## Technical Field

The application relates to the field of communication technology, specifically focusing on a method and apparatus for wireless communication.

## Background Art

In the vehicle to everything (V2X) system, the V2X device can send lateral data to another V2X device for side communication.

In order to reduce the power consumption of the V2X device, the V2X device can operate in the discontinuous reception (DRX) mode. In this mode, the V2X receiving device can only receive lateral data within the activation time. To ensure that the V2X receiving device can receive lateral data, the V2X sending device can send lateral data within the activation time of the receiving device.

However, when V2X sending devices engage in lateral communication with multiple V2X receiving devices while ensuring low power consumption, there is currently no suitable solution for determining how the V2X sending devices should transmit lateral data.

## Content of Invention

This application provides a method and device for wireless communication that can reduce the power consumption of V2X transmitting devices.

In the first aspect, the application provides a method for wireless communication, comprising the following steps: the first device receives multiple pieces of first information corresponding to multiple activation time, wherein the multiple activation time is the activation time of multiple second devices; the first device selects a target activation time from the multiple activation time; and the first device sends lateral data on the time frequency resource within the target activation time.

In the second aspect, a wireless communication device is provided, which is the first device comprising: a receiving unit for receiving multiple pieces of first information, where each of the multiple pieces of first information corresponds to multiple activation times, and these activation times are the activation times of multiple second devices; a selecting unit for selecting the target activation time from the multiple activation times; and a sending unit for sending lateral data on the time-frequency resources within the target activation time.

In the third aspect, the application provides a device for communication, comprising a memory and a processor, wherein the memory is used to store a program, and the processor is used to call the program in the memory to execute the method as described in the first aspect.

In the fourth aspect, the application provides a device, comprising a processor for calling the program from the memory to execute the method described in the first aspect.

In the fifth aspect, the application provides a chip, comprising a processor for calling the program from the memory to enable the device equipped with the chip to execute the method as described in the first aspect.

In the sixth aspect, the application provides a computer-readable storage medium on which a program is stored, which enables the computer to execute the method as described in the first aspect.

In the seventh aspect, the application provides a computer program product, including the program that enables the computer to execute the method as described in the first aspect.

In the eighth aspect, the application provides a computer program that enables the computer to execute the method as described in the first aspect.

In the process of lateral communication, the first device (i.e. V2X sending device) can select partial activation time from multiple activation time as the target activation time, and send lateral data on the time frequency resources within that target activation time. This means that the first device can avoid sending lateral data during all multiple activation times and instead transmit it only during the target activation time, thus reducing the time required for the first device to send lateral data and consequently reducing power consumption.

## Figures

Figure 1 is a schematic diagram of the system for wireless communication applying an embodiment of the application.

Figure 2 is a schematic diagram of resource sensing.

Figure 3 is a schematic diagram of periodic partial sensing.

Figure 4 is a schematic diagram of continuous partial sensing.

Figure 5 is a schematic diagram of DRX.

Figure 6 is a schematic diagram of a method for determining the activation time of the sending terminal.

Figure 7 is a schematic flowchart of a method for wireless communication provided in an embodiment of the application.

Figure 8 is a schematic diagram of the method for determining the activation time of the first device provided in an embodiment of the application.

Figure 9 is a schematic block diagram of a communication device provided in an embodiment of the application.

Figure 10 is a schematic structural diagram of a communication device provided in an embodiment of this application.

**Detailed Description of the Preferred Embodiments**

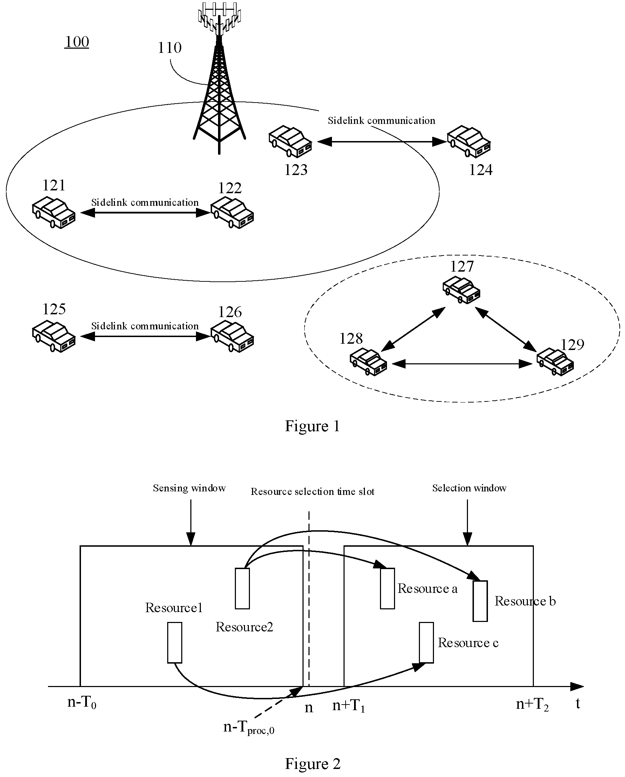

The technical solution in the application is described in the following in conjunction with the figures. For ease of understanding, the following description introduces the terminology and communication process involved in the application in conjunction with Figures 1 to 6.

Figure 1 is the wireless communication system 100 applicable to the embodiment of the application, which may comprise a network device 110 and terminals 121 to 129. Network device 110 can provide communication coverage for specific geographic areas and can communicate with terminals located within that coverage area.

In some implementation methods, the communication between terminals can be achieved through sidelink (SL). Sidelink communication can also be referred to as proximity services (ProSe) communication, unilateral communication, sidechain communication, and device to device (D2D) communication.

Or, in other words, lateral data is transmitted between terminals through side link. The lateral data can include data and/or control signaling. In some implementation methods, lateral data can be physical sidelink control channel (PSCCH), physical sidelink control channel (PSSCH), PSCCH demodulation reference signal (DMRS), PSSCH DMRS, physical side feedback channel (PSFCH), etc.

Several common side link communication scenarios are introduced in conjunction with Figure 1 in the following. According to whether the terminals in the side link are within the coverage range of the network device, communication in the side link can be divided into four scenarios. Scenario 1, the terminals conduct side link communication within the coverage range of the network device. Scenario 2, some terminals engage in side link communication within the coverage range of the network device. Scenario 3, the terminals perform sidelink communication outside the coverage range of the network device.

As shown in Figure 1, in Scenario 1, terminals 121 to 122 can communicate through side link, and terminals 121 to 122 are all within the coverage range of network device 110, or in other words, terminals 121 to 122 are all within the coverage range of the same network device 110. In this scenario, network device 110 can send configuration signals to terminals 121 to 122, and accordingly, terminals 121 to 122 communicate through side link based on the configuration signals.

As shown in Figure 1, in Scenario 2, terminals 123 to 124 can communicate through side link, and terminals 123 are within the coverage range of network device 110, while terminals 124 are outside the coverage range of network device 110. In this scenario, terminal 123 receives configuration information from network device 110 and communicates through side link based on the configuration of the configuration signaling. However, for terminal 124, being outside the coverage range of network device 110 means it cannot receive configuration information from network device 110. In this situation, terminal 124 can obtain the side link communication configuration based on pre-configuration information and/or configuration information sent by terminal 123, which is located within the coverage range. This allows terminal 124 to communicate with terminal 123 through the side link based on the acquired configuration.

In some cases, terminal 123 can send the aforementioned configuration information to terminal 124 through the physical sidelink broadcast channel (PSBCH) to configure communication via sidelink.

As shown in Figure 1, in Scenario 3, terminals 125 to 129 are located outside the coverage range of network device 110 and cannot communicate with network device 110. In this case, terminals can communicate on side link based on preconfigured information.

In some cases, terminals 127 to 129 located outside the coverage range of the network device can form a communication group, and terminals 127 to 129 within the communication group can communicate with each other. In addition, terminal 127 within the communication group can serve as a central control node, also known as a cluster header (CH), and correspondingly, the terminals within other communication groups can be referred to as "group members".

Terminal 127 as a CH can have one or more of the following functions: establishing communication groups; the joining and leaving of group members; resource coordination, allocating side transmission resources to group members, and receiving side feedback information from group members; and coordinating resources with other communication groups, etc.

It should be noted that Figure 1 provides an illustrative example of a network device and multiple terminal devices. Optionally, the wireless communication system 100 may include multiple network devices, and each network device's coverage area may include varying numbers of terminal devices. The embodiments of this application do not impose limitations in this regard.

Optionally, the wireless communication system 100 may also comprise other network bodies such as network controllers, mobile management bodies, etc., which are not limited by embodiments of the application.

It should be understood that the technical solution of the embodiment of the application can be applied to various communication systems, such as fifth generation (5G) systems or new radio (NR), long term evolution (LTE) systems, LTE frequency division duplex (FDD) systems, LTE time division duplex (TDD) systems, etc. The technical solution provided in the application can also be applied to future communication systems, such as sixth generation mobile communication systems, satellite communication systems, etc.

The terminals in the embodiment of the application can also be referred to as user equipment (UE), access terminals, user units, user stations, mobile stations, mobile stations (MSs), mobile terminals (MTs), remote stations, remote terminals, mobile devices, user terminals, terminal devices, wireless communication devices, user agents or user devices. The terminal devices in the embodiment of the application can be any devices that provide voice and/or data connectivity to users, and can be used to connect people, objects and machines, such as handheld devices and vehicle mounted devices with wireless connection function, etc. The terminal devices in the embodiment of the application can be mobile phones, tablets, laptops, handheld computers, mobile internet devices (MIDs), wearable devices, virtual reality (VR) devices, augmented reality (AR) devices, wireless terminals in industrial control, wireless terminals in self driving, wireless terminals in remote medical surgery, wireless terminals in smart grid, wireless terminals in transportation safety, wireless terminals in smart city, wireless terminals in smart home, etc. Optionally, UE can be used as a base station. For example, UE can act as a scheduling body providing lateral data between UEs in V2X or D2D, etc. For example, cellular phones and cars use lateral data to communicate with each other. The communication between cellular phones and smart home devices doesn't need the communication signal relay through base stations.

The network device in the embodiment of the application may be a device for communicating with terminal devices. This network device can also be called an access network device or a wireless access network device, such as a base station. The network device in the embodiment of the application may be a radio access network (RAN) node (or device) that connects the terminal device to the wireless network. The base station can broadly cover or be replaced with the names in the following, such as node B, evolved nodeB (eNB), next generation nodeB (gNB), relay station, access point, transmission and receiving point (TRP), transmission point (TP), main station MeNB, secondary station SeNB, multistandard radio (MSR) node, home station network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station can be a macro base station, a micro base station, a relay node, a donor node or similar, or the combination thereof. The base station can also be used for the communication modules, modems or chips installed within the aforementioned equipment or devices. The base station can also be a mobile switching center, a device that performs base station functions in D2D, V2X, machine-to-machine (M2M) communications, network-side equipment in 6G networks, and devices that perform base station functions in future communication systems. The base station can support networks with the same or different access technologies. The embodiments of the application do not limit the specific technology and device form adopted by the network equipment.

The base station can be fixed or mobile. For example, a helicopter or drone can be configured to serve as a mobile base station. One or more cells can move based on the location of the mobile base station. In other examples, the helicopter or drone can be configured as the device for communication with another base station.

In some deployments, the network device in the embodiment of the application may refer to CU or DU, or the network device includes CU and DU, and gNB can also include AAU.

Both the network device and terminal device can be deployed on land, including indoor or outdoor, handheld or vehicular, as well as on water, and can also be deployed on airplanes, balloons and satellites. The embodiment of the application does not limit the scenarios in which the network devices and terminal devices are located.

It should be understood that all or part of the functions of the communication devices in the application can also be achieved through software functions running on hardware, or through virtualization functions instantiated on platforms (such as cloud platforms).

## Side link resource allocation method

At present, two resource allocation methods for sidelink resources, namely Mode 1 and Mode 2, are defined in some communication systems (such as NR).

Mode 1, network devices are used as terminal devices to schedule sidelink resources.

Currently, in Mode 1, it can be divided into two methods: dynamic resource allocation and sidelink configured grant (SL CG). Under dynamic resource allocation, network devices can allocate side transmission resources to terminals by sending downlink control information (DCI). In the side link configuration authorization mode, when the terminal is configured with side link resources, if the terminal needs to send data, it can use the configured side link resources to transmit data without the need to reapply for side link resources from network devices. Therefore, adopting the resource allocation method of configuration authorization can reduce the transmission delay of the sidelink.

The above configuration authorization is further divided into two types. In Type 1 of configuration authorization, the configuration of sidelink resources is entirely based on radio resource control (RRC) signaling. In Type 2 of configuration authorization, the configuration of side link resources in the communication system can be jointly configured by RRC signaling and layer 1 (L1) signaling, where L1 signaling is used to indicate the activation and deactivation of RRC configuration.

In some implementation methods, the network devices can schedule sidelink resources of single transmission for terminals. In other implementation methods, the network devices can also configure semi-static sidelink resources for terminals.

For example, as shown in Figure 1, terminal devices 121 to 123 are located within the coverage range of the network device 110, and network device 110 can allocate side link resources for terminal devices 121 to 123.

Mode 2, the terminal autonomously selects sidelink resources in the SL resource pool.

For example, as shown in Figure 1, terminal devices 124 to 129 are located outside the coverage range of network device 110, and terminal devices 124 to 129 can autonomously select side link resources through the Mode 2 described above.

The SL resource pool can be configured or pre-configured by network devices. For example, the network devices can configure SL resource pools to terminals through high-level signaling (such as RRC signaling).

In this mode, the process executed by the terminal includes the resource sensing process and/or the resource selection process. Resource sensing can also be referred to as resource listening or resource probing. For example, the terminal can select SL transmission resources in the SL resource pool through sensing.

During the resource sensing process, the terminal can identify the occupancy (or reservation) of sidelink resources by demodulating sidelink control information (SCI), that is, the terminal can obtain resource reservation information from other terminals by demodulating SCI. The terminal can also identify the occupancy of side link resources by measuring the received power of the side link. For example, the terminal can determine the occupancy of sidelink resources based on the reference signal receiving power (RSRP) value of the corresponding SL demodulation reference signal (DMRS) when decoding SCI. In some embodiments, the terminal can select resources from the SL resource pool that are either not reserved by other terminals or reserved by other terminals but have lower received power, thus reducing the probability of resource collisions and improving communication reliability.

Resource sensing can include full sensing and partial sensing. Partial sensing can include periodic based partial sensing (PBPS) and continuous partial sensing (CPS). These resource sensing methods are introduced below.

Figure 2 illustrates a schematic diagram of the full sensing mechanism. As shown in Figure 2, the terminal can sense the resources within the selection window in the sensing window, thereby selecting or excluding candidate resources within the selection window. The candidate resources within the selection window are available resources in the SL resource pool. The above sensing window can also be referred to as a listening window.

Assuming that resource selection is triggered when the lateral data of the terminal arrives in time slot n. The resource selection window starts from $n+T_1$ and ends at $n+T_2$. Wherein, $0 \leq T_1 \leq T_{proc,\,1}$. When the subcarrier spacing is 15kHz, 30kHz, 60kHz and 120kHz, $T_{proc,1}$ has 3, 5, 9 and 17 time slots, respectively. $T_{2min} \leq T_2 \leq$ packet delay budget (PDB). PDB is used to limit the latest allowable time for terminals to send lateral data, and the size of this PDB is related to the latency requirements of specific application or service. PDB can be configured by the network devices to terminals, for example, the network devices can configure PDB to terminals through high-level signaling (such as RRC signaling). This PDB can also be referred to as the retaining PDB. The possible values for $T_{2min}$ are $(1, 5, 10, 20) \times 2^{\mu}$ time slots, where, $\mu = 0, 1, 2,$ and 3 corresponding to subcarrier intervals of 15kHz, 30kHz, 60kHz and 120kHz, respectively. The terminals can select resources in the resource selection window that can send lateral data and upload the lateral data to be sent.

The resource sensing window starts from $n-T_0$ and ends at $n-T_{proc,0}$. Wherein, the value of $T_0$ is 100ms or 1100ms. When the subcarrier spacing is 15kHz, 30kHz, 60kHz and 120kHz, $T_{proc,0}$ respectively has 1, 2, and 4 time slots.

The terminal can sense the candidate resource within the selection window in the sensing window to determine whether the candidate resource can be used to send lateral data. For the convenience of description, the candidate resource within the selection window mentioned above will be referred to as set A. The candidate resource can be the resource within the selection window that can meet the lateral data transmission requirements. For example, the terminal can determine the candidate resource in the SL resource pool at resource granularity based on the number of subchannels. The candidate resource is the resource within the SL resource pool. The number of subchannels can represent the number of subchannels occupied by the lateral data to be sent by the terminal. The number of subchannels can be configured by network devices to the terminal, for example, the network device can configure the number of subchannels to the terminal through high-level signaling (such as RRC signaling).

If the terminal senses the reserved resource information to other terminals within the sensing window, and its reserved resources are within the resource selection window, the terminal can exclude the corresponding resources from set A. In some embodiments, if the terminal senses reserved resource information to other terminals within the sensing window, and their reserved resources are within the resource selection window, and the measured RSRP is greater than the preset threshold, the terminal can exclude the corresponding resources from set A.

Taking Figure 2 as an example, in the sensing window, if the terminal senses the resource reserved information of other terminals on resource 1, and the resource reserved information indicates that the reserved resource is resource c, the terminal can exclude resource c from set A. For instance, if the terminal senses resource reservation information from other terminals on resource 2 within the sensing window, and the reservation information indicates that resources a and b are reserved, the terminal can exclude resources a and b from set A. After the above resource sensing and resource exclusion, the terminal can send lateral data on the remaining resource set (referred to as set B). The terminal can select a time frequency resource from set B to send lateral data. In some embodiments, the terminal may randomly select a time frequency resource from set B to send lateral data. In other embodiments, the terminal can also select a time frequency resource from set B to send lateral data according to certain rules.

Partial sensing mechanism can refer to that the terminal selects resources based on the resource occupancy information of some time sections in the sensing window. These time sections can be either continuous or discontinuous. Compared to the full sensing mechanism, partial sensing only requires sensing some time sections in the sensing window, which reducing the power consumption of the terminal. Optionally, the time sections can be a wireless frame, subframe, time slot, symbol or any other time sections, etc., which is not limited here. The following provides examples based on time slots.

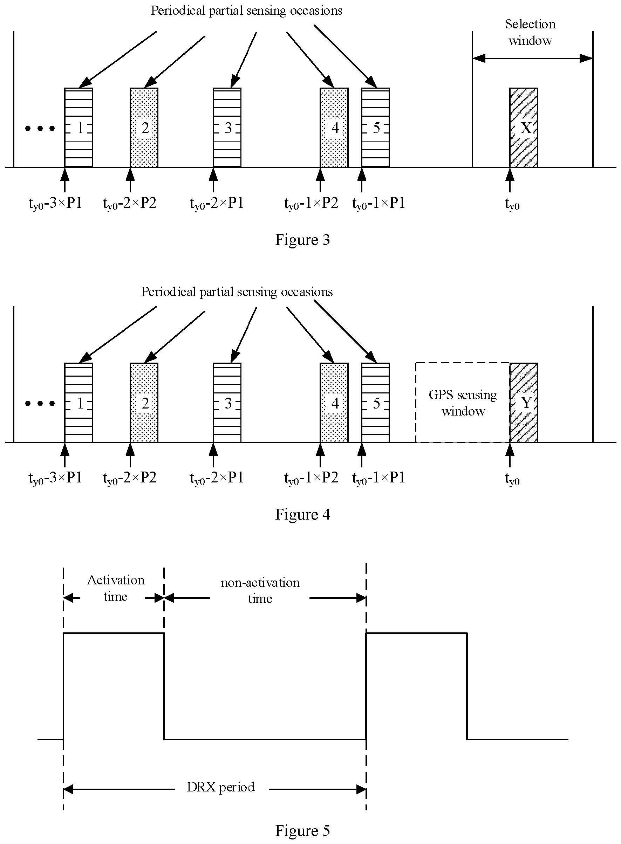

Figure 3 shows a schematic diagram of the PBPS mechanism. PBPS can refer to a certain period of time between two sensing resources. Terminals transmit data periodically, all data transmissions are conducted periodically. For example, the terminals can periodically reserve resources. Taking period P1 as an example, the terminal can send resource reservation indication information on time slot n-P1 to reserve resources on the time slot n. As shown in Figure 3, PBPS can include the sensing occasions based on period P1 and sensing occasion based on period P2.

As shown in Figure 3, resource X is the first resource among the candidate resources. The first resource in the candidate resources can be understood as the resource that is located first in the time domain among the candidate resources. $T_{y0}$ is the starting time of resource X. If the sensing occasion is determined based on period P1, the sensing occasion in the sensing window can include resource 1, resource 3 and resource 5. The starting time for resources 1, 3 and 5 are $t_{y0}-3 \times P1$, $t_{y0}-2 \times P1$ and $t_{y0}-1 \times P1$, respectively. If the sensing occasion is determined based on period P2, the sensing occasions within the sensing window can include resources 2 and 4. The starting time for resources 2 and 4 are $t_{y0}-2 \times P2$ and $t_{y0}-1 \times P2$ respectively.

If the terminal business is periodic, the PBPS mechanism can sense the resources within the selection window to determine the available resources within the selection window. However, some communication systems (such as NR-V2X) introduce non-periodic services, i.e, the terminal can support both the periodic and non-periodic services simultaneously. After the terminal completes the resource selection, the resources that have been selected but have not been sent SCI instructions may be reserved by other terminals with sudden non-periodic application or services, leading to resource collisions. To address this issue, the terminal needs to sense both the periodic and non-periodic resource reservations. On this basis, the continuous partial sensing mechanism is introduced.

CPS can be based on PBPS. For example, the embodiment of the application can first use the PBPS mechanism to filter the resources within the selection window to obtain resource set B. Then, the CPS mechanism can be used to filter the resources in set B to obtain resource set C. The terminal can use the resources in set C for sidelink transmission.

Taking Figure 4 as an example, the terminal can perform sensing for a continuous period of time before resource Y. The continuous period of time is also known as the CPS sensing window. The CPS sensing window is used for sensing the non-periodic resource reservation. Resource Y is the first resource in the resource set selected based on PBPS. Alternatively, resource Y is the first resource in the aforementioned resource set B. Resource Y can be the same or different from resource X in Figure 3. For example, if during the PBPS process, the terminal senses that resource X has already been reserved by other terminals, then resource Y is different from resource X.

The duration of the CPS sensing window can be the maximum time interval between two data transmissions. The duration of the CPS sensing window can be M time slots. If the default value of M is 31, then if the maximum time interval between two data transmissions is 31 time slots, the duration of the CPS sensing window is 31 time slots. The CPS sensing window can be 31 time slots before the starting time of resource Y, or in other words, the starting time of the CPS sensing window is the 31st time slot before the starting time of resource Y. Of course, the duration of the CPS sensing window can be configured by network device or predefined by protocol.

**Side link transmission method**

V2X communication involves not only the information exchange between vehicles, but also the information exchange between vehicles and external systems, such as streetlights, buildings, pedestrians and wireless communication networks. The V2X system enables the vehicle to obtain information related to weather, nearby accidents, road conditions, activities of nearby vehicles and pedestrians, and objects near the vehicle. This information can be used to improve the driving experience, increase vehicle safety, and provide services such as autonomous driving. With the increasing demand for V2X communication, the Third Generation Partner Project (3GPP) has also promoted V2X sidelink technology under the 5G NR system framework to meet enhanced vehicle driving experiences such as automatic queuing driving, support for extended sensing, semi-automatic or fully automatic driving and remote driving.

With the development of autonomous driving technology, it is possible to integrate autonomous driving technology with communication systems, or in other words, data exchange between onboard devices needs to be achieved through the communication system. Therefore, the requirements for the communication system have become higher. For example, if the communication system is required to support higher throughput, lower latency, higher reliability, larger coverage, more flexible resource allocation, etc. In LTE-V2X, communication between terminals is only supported in a broadcast manner. With the development of technology, unicast and multicast transmission methods are introduced into NR-V2X.

For unicast transmission, there is usually only one terminal that receives lateral data. Referring to Figure 1, the communication between terminal 121 and terminal 122 can be achieved through unicast transmission. When terminal 121 sends lateral data through the side link, terminal 122 receives the lateral data as the only receiving device.

For multicast transmission, the terminal receiving lateral data can be all terminals within one communication group, or the terminal receiving lateral data can be all terminals within a certain transmission distance. For example, referring to Figure 1, for a communication group comprising terminals 127 to 129, when terminal 127 sends lateral data in a multicast manner, other terminals 128 to 129 within the communication group are all receiving terminals for the lateral data. For another example, referring to Figure 1, assuming that the terminals within the preset range include terminals 127 to 129, when terminal 127 sends lateral data in multicast mode, other terminals 128 to 129 within the preset range are all receiving terminals for the lateral data.

For the transmission method of broadcasting, the terminal that receives lateral data can be any terminal around the sending terminal. For example, referring to Figure 1, assuming terminal 125 is the sending terminal and sends lateral data in the form of broadcasting, terminals 121 to 124 and 126 to 129 located around terminal 125 can all serve as the receiving terminals of lateral data.

At present, the design of side links is based on that V2X terminals always operate with sufficient battery capacity. In addition, power savings is an important consideration in the study of sidelinks, namely, terminals need to operate the sidelink in a way that improves power efficiency when the battery is limited.

In order to reduce the power consumption of terminals, some communication systems have introduced the DRX mechanism. This allows terminals to enter a non-continuous receiving state when there is no data to receive, rather than keeping the receiver constantly active, thus achieving power savings. The DRX mechanism of the embodiments of the application is introduced in the following.

DRX

Figure 5 is a schematic diagram of DRX. As shown in Figure 5, a DRX cycle includes "on duration or activation time" and "opportunity for DRX". For example, the activation time can refer to the time range during which the timer has not timed out, i.e. the running period. The timer can be drx-on Duration Timer, drx-Inactivity Timer, drx-Retransmission Timer DL, drx-Retransmission Timer UL, or ra-Contention Resolution Timer, etc. During the activation time, the terminal monitors and receives side channels and signals including the physical sidelink control channel (PSCCH). During opportunity for DRX, the terminal enters sleep mode and does not receive the side channels and signals such as PSCCH to reduce power consumption.

Network devices configure DRX cycles for terminals. The method of configuring timers can also be adopted, for example, network devices can use the DRX short cycle timer Drx short Cycle Timer to time the short cycles. When the Drx short Cycle Timer is turned on, the DRX short cycle starts timing. When the Drx short Cycle Timer runs out of time, the DRX short cycle ends. For example, the network devices can configure the Drxlong Cycle Timer for long cycle timing. When the DrxlongCycleTimer is activated, the DRX long cycle begins. When the DrxlongCycleTimer times out, the DRX long cycle ends.

The activation period of the DRX cycle is determined by the drx-onDurationTimer. After the drx-OnDurationTimer starts, the terminal needs to listen to PSCCH until the drx-onDurationTimer times out. At the beginning of each new DRX cycle, the terminal must start the timer. As shown in Figure 3, the activation time is part of the DRX cycle. The drx-onDurationTimer corresponds to the activation time. When the drx-onDurationTimer starts, the terminal enters the activation time, continuing until the drx-onDurationTimer concludes. The duration of the drx-OnDurationTimer can be configured by network devices. For example, it can be set to two time slots through high-level parameter configuration.

If both DRX short cycle and DRX long cycle are configured for the terminal, the durations of the drx-on Duration Timer for both DRX types can be the same or different.

Drx-OndurationTimer:

For DRX short cycles, the terminal can start the Drx-Onduration Timer within the DRX cycle if the terminal meets the following conditions:

[(SFN*10) + subframe number] modulo (shortDRX - Cycle) = (drxStartOffset) modulo (shortDRX -Cycle).

[(SFN*10) + subframe number] modulo (shortDRX - Cycle) = (drxStartOffset) modulo (shortDRX-Cycle).

Drx-OndurationTimer:

For DRX long cycles, the terminal can start the Drx-Onduration Timer within the DRX cycle if the terminal meets the following conditions:

$$[(SFN*10)+\text{subframe number}]\,modulo(longDRX\text{-}Cycle) = drxStartOffset.$$

$$[(SFN*10)+\text{subframe number}]\,modulo(longDRX\text{-}Cycle) = drxStartOffset.$$

Wherein, SFN is the current system frame number; modulo is to take remainder or modulus; Short DRX-Cycle is DRX short cycle; drxstartoffset is the starting position of the DRX cycle; the starting position of the DRX cycle can be measured in subframes, time slots or symbols. For example, the subframe 0 is the starting position of the DRX cycle, or symbol 1 is the starting position of the DRX cycle; and longDRX Cycle is a DRX long cycle.

As mentioned above, in DRX mode, the receiving terminal can only receive lateral data within the activation time. If the sending terminal sends lateral data within the opportunity for DRX, the receiving terminal will not be able to receive lateral data. In order to ensure that the receiving terminal can receive lateral data, a solution has been proposed by relevant technologies. The receiving terminal sends its activation time-related parameters to the sending terminal. The sending terminal can then choose to send resources within the activation time of the receiving terminal and transmit lateral data within that designated resource. That is to say, the sending terminal can adjust its sending resource so that the sending resource is within the activation time of the receiving terminal. For example, the sending terminal can keep its activation time consistent with the activation time of the receiving terminal. The activation time related parameters can include one or more of the following: activation timer, DRX cycle period, DRX inactivation timer, DRX retransmission timer, DRX uplink retransmission timer, and DRX start position offset value.

However, when the sending terminal communicates laterally with multiple receiving terminals, such as in a groupcast scenario, multiple receiving terminals can send activation time-related parameters to the sending terminal. If multiple receiving terminals have different activation times, when the sending terminal combines the received activation times to align with all receiving terminals, it may result in the sending terminal remaining in an active state continuously. This is not conducive to power savings for the sending terminal.

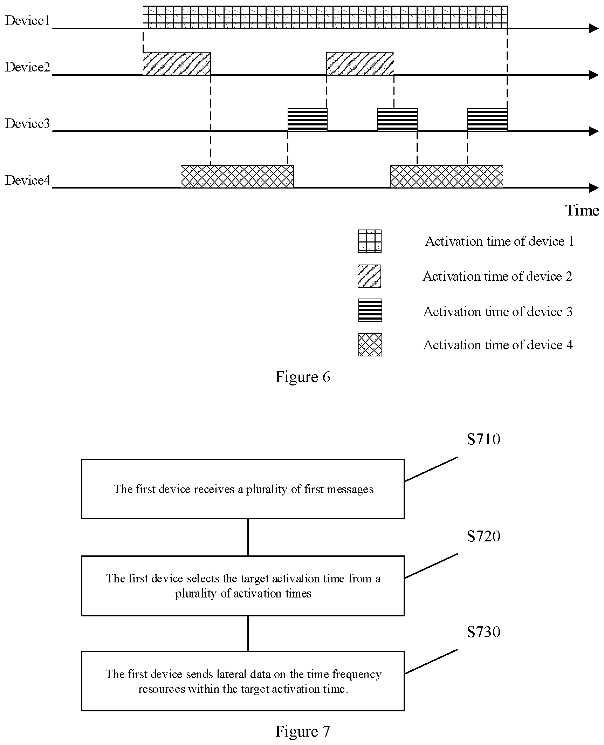

The following example is given for explanation based on Figure 6. Terminal 1 communicates with terminal 2, terminal 3 and terminal 4. Terminal 1 is the sending end and terminal 2, terminal 3 and terminal 4 are the receiving ends. Terminal 2, terminal 3 and terminal 4 can send their activation time related parameters to terminal 1. After receiving the activation time related parameters from terminal 2, terminal 3 and terminal 4, terminal 1 can adjust its sending resources to be within the activation time of terminal 2, terminal 3 and terminal 4. If terminal 1 merges the activation times of terminal 2, terminal 3 and terminal 4, that is, the sum of the activation times of terminal 2, terminal 3 and terminal 4 is used as the own activation time of terminal 1, then terminal 1 remains active.

Based on above, the embodiment of the application proposes a method and device for wireless communication, which can reduce the power consumption of the sending end by selecting partial activation time from multiple activation times and only sending side ata within the partial activation time.

The method for wireless communication of the embodiment of the application is introduced in the following in conjunction with Figure 7.

Refer to Figure 7, in step S710, the first device receives multiple first messages. The multiple first messages correspond to multiple activation time which is the activation time of multiple second devices.

The first device and the second devices are for side communication. The first device can be a sending terminal, or called a sensing terminal, and the second devices are receiving terminals. Unicast communication, multicast communication or broadcast communication can be carried out between the first device and multiple second devices.

The multiple first messages can be sent separately by multiple second devices. The multiple second devices can send their respective first messages to the first device. The first message can be the activation time related parameters described above. The first essage can be one or more of the activation time parameters, opportunity for DRX parameters or DRX configuration parameters. The activation time parameter can include one or more of the activation duration, start time, end time and activation timer. The opportunity for DRX parameters can include one or more of the duration of the opportunity for DRX, starting time, ending time and the inactivation timers. The DRX configuration parameters can include one or more of DRX cycle, starting time of DRX cycle, activation timer, DRX non-activation timer, DRX retransmission timer, DRX uplink retransmission timer and DRX start position offset value.

If the first device receives opportunity for DRX related parameters, the first device can directly obtain the corresponding activation time. If the first device receives opportunity for DRX related parameters or DRX configuration parameters, the first device can determine the corresponding activation time based on opportunity for DRX related parameters or DRX configuration parameters.

The above activation time can be a long cycle or short cycle type, which is not limited by the embodiment of the application.

In step S720, the first device selects the target activation time from multiple activation time.

The first device can select partial activation time from multiple activation time as the target activation time, which means that the target activation time is the partial activation time from multiple activation time. In some embodiments, the target activation time is one of multiple activation time. The first device can select one activation time from multiple activation time as the target activation time. In this case, the target activation time is the activation time of one of the multiple second devices. The activation time here can refer to the activation time within a DRX cycle. Assuming a second device is device a, the activation time here can refer to the activation time of device a within one DRX cycle. The method for determining the target activation time is described in detail in the following.

In step S730, the first device sends lateral data on the time frequency resources within the target activation time.

The time frequency resource is within the target activation time. The time frequency resource is the available resource within the target activation time. The first device can only send lateral data on time frequency resources within the target activation time, without the need to send lateral data within multiple activation time, thereby reducing the power consumption of the first device. For the convenience of description, the time frequency resources within the target activation time are referred to as target time frequency resources in the following.

In some embodiments, the first device may use the target activation time as its own activation time. Alternatively, the first device can only use the time domain location of the target time frequency resource as its activation time.

The embodiment of the application does not impose any specific limitations on the method of determining the target activation time. For example, the target activation time is randomly selected by the first device, that is, the target activation time is any one of the multiple activation time. For example, the first device can select the longest activation time from multiple activation time as the target activation time.

In some embodiments, the target activation time may also be determined based on the number of available resources included in the activation time. The available resources can refer to the resources that can be used to transmit lateral data during the activation time, or in other words, the available resources can refer to the resources that can meet the requirements for lateral data transmission. For example, the available resources can be the resources that meet the requirement of the number of subchannels. The number of subchannels is used to indicate the number of subchannels occupied by the lateral data, and can be configured by the network device for the first device. For example, the network device can configure the number of subchannels to the first device through high-level signaling (such as RRC signaling).

The available resources are from the SL resource pool. The first device can select resources from the SL resource pool that are within the target activation time. For example, the first device can search for available resources within the target activation time in the SL resource pool using the number of subchannels as the granularity of the resources. The SL resource pool can be configured by the network device for the first device. For example, the network devices can configure SL resource pools to the first device through high-level signaling (such as RRC signaling). The SL resource pool includes multiple time frequency resources.

In order to ensure the transmission delay requirements of data, the network device can configure PDB parameters to the first device. PDB is used to limit the latest time for the first device to send lateral data, and the size of this PDB is related to the latency requirements of the business. The time domain of the target time frequency resource in the embodiment of the application is located before the time domain position determined based on PDB.

The embodiment of the application does not impose any specific limitations on the method by which the first device determines the target activation time based on the number of available resources included within the activation time. In some embodiments, the first device may choose the activation time that contains a larger number of available resources as the target activation time. For example, the first device can choose the activation time with the highest number of available resources as the target activation time. For example, the first device can choose the activation time that contains more available resources than the preset threshold as the target activation time. For example, the first device can rank multiple activation time based on the number of available resources included, and select the top x% of activation time as the target activation time.

The number of target activation time can be one or more, which is not limited by the embodiment of the application. The target activation time is the partial activation time of multiple activation time. The multiple target activation time can be the activation time of one second device in different DRX cycles, or the activation time of different second devices in DRX cycles.

After determining the target activation time, in order to avoid resource conflicts, the first device can also sense the available resources within the target activation time to determine the target time frequency resources. The target time frequency resource is a resource that has not been reserved by other devices. The first device can send side row data on the target time frequency resource.

The available resources within the target activation time can be referred to as candidate resource sets in the embodiment of the application. It should be noted that the available resources here are not the resources that can truly transmit lateral data, but those within the resource pool that can meet the requirements for lateral data transmission. After determining the candidate resource set, the first device also needs to sense the resources within the candidate resource set to determine whether the resources within the candidate resource set are reserved by other devices. The first device can remove the resources reserved by other devices from the candidate resource set and send lateral data within the remaining resources. The remaining resources can be referred to as a resource selection set. The above target time frequency resources are resources within the resource selection set. The target time frequency resource can be any time frequency resource in the resource selection set, that is, the first device can randomly select a time frequency resource from the resource selection set as the target time frequency resource. Alternatively, the first device can select the target time frequency resource from the resource selection set according to preset rules.

The embodiment of the application does not impose any specific limitations on the way the first device senses the resource. For example, the first device can adopt one or more of the full sensing mechanism, periodic partial sensing mechanisms, and continuous partial sensing mechanism described above for sensing.

Since the first device needs to sense the resources within the target activation time in order to determine the target time frequency resource, when the first device selects the activation time with the highest number of available resources as the target activation time, the probability of successful transmission of lateral data can be increased. For example, if the first device selects the activation time that contains limited available resources as the target activation time, due to the limited available resources within the target activation time, it is highly likely that during the process of resource sensing, the available resources within the target activation time are reserved by other devices, resulting in the first device being unable to successfully transmit lateral data.

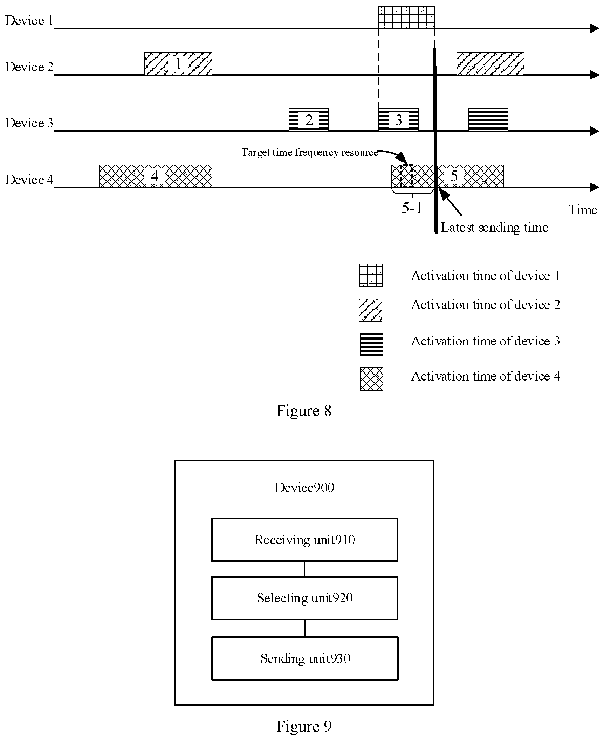

The solution of the embodiment of the application is introduced in detail in the following in conjunction with Figure 8.

The first device is device 1, and multiple second devices can include device 2, device 3 and device 4. The activation time of devices 2, 3, and 4 are shown in Figure 8.

The network device can configure one or more of the following parameters to the first device through high-level signaling: SL resource pool, number of subchannels and PDB. When lateral data arrives, the first device can determine the latest sending time of lateral data based on PDB.

Device 1 can first determine the latest sending time of lateral data based on PDB, and then determine the candidate activation time before the latest sending time. It can be understood that the candidate activation time can be the activation time within the selection window described above. As described above, the resource selection window starts from $n+T_1$ and ends at $n+T_2$. Wherein, $0 \le T_1 \le T_{proc, 1}$, $T_{2min} \le T_2 \le PDB$.

Refer to Figure 8, the activation time before the latest sending time includes the activation time 1 of device 2, the activation time 2 and 3 of device 3, and the activation time 4 and 5 of device 3. The activation time 5 only has partial time-domain resources located before the latest sending time. In this case, the activation time before the latest sending time can be used as candidate activation time, while the activation time after the latest sending time cannot be used as the candidate activation time. Therefore, the candidate activation time can include: activation time 1, activation time 2, activation time 3, activation time 4 and activation time 5-1.

Device 1 can determine the number of available resources in the candidate activation time. The available resources can refer to the resources that can be used to transmit lateral data during the activation time. For example, the first device can select resources from the SL resource pool that are within the activation time and can be used to transmit lateral data. Alternatively, available resources belong to the resources in the SL resource pool.

Device 1 can determine the available resources in activation time 1, activation time 2, activation time 3, activation time 4 and activation time 5-1, respectively. If activation time 5-1 has the most available resources, device 1 can set activation time 5-1 as the target activation time.

The available resources within the activation time of 5-1 can be referred to as the candidate resource set. Not all resources in the candidate resource set are available for transmitting lateral data. Device 1 also needs to sense the resources in the candidate resource set to determine whether the resources are reserved by other devices. To avoid resource conflicts, only the resources that have not been reserved by other devices can be used for transmitting lateral data.

Device 1 can adopt one or more of the full sensing mechanism, periodic partial sensing mechanism, and continuous partial sensing mechanism described above for sensing. Device 1 can sense the resources in the candidate resource set within the resource sensing window. If device 1 adopts the full sensing mechanism, the resource sensing window starts from $n-T_0$ and ends at $n-Tp_{roc, 0}$. If device 1 adopts the periodic partial sensing mechanism, there is a certain interval between the sensing opportunities within the PBPS sensing window. If device 1 adopts the continuous partial sensing mechanism, the time interval between the starting time of the CPS sensing window and the first resource in the candidate resource set is the duration of one CPS sensing window.

If device 1 senses that resource 1 in the candidate resource set is reserved by other devices, device 1 can remove resource 1 from the candidate resource set. After the above resource sensing and resource removal, device 1 can send lateral data on the remaining resources. The remaining resources can be referred to as a resource selection set in the embodiment of the application.

Device 1 can randomly select a time frequency resource from the resource selection set as the target time frequency resource and send lateral data on that target time frequency resource. Alternatively, device 1 can determine the target time frequency resource according to preset rules.

In some embodiments, device 1 may keep its activation time consistent with activation time 5-1, that is, the activation time of device 1 is the time when activation time 5-1 occurs, as shown in Figure 8. In other embodiments, device 1 can also keep its activation time consistent with the time of the target time frequency resource, that is, the activation time of device 1 is the time of the target time frequency resource.

Since device 1 selects the time frequency resource within the activation time of 5-1 as the target time frequency resource, device 4 can receive lateral data sent by device 1. However, if the target time frequency resource is also within the activation time of other devices, other devices can also receive lateral data. Referring to Figure 8, the target time frequency resource is not only located within the activation time of device 4, but also within the activation time of device 3. Therefore, if device 1 sends lateral data within the target time frequency resource, device 3 can also receive the lateral data sent by device 1.

In the embodiment of the application, device 1 may determine the time frequency resources for transmitting lateral data in the manner described above each time when data needs to be sent.

The above text provides detailed description of the method embodiments of the application in conjunction with Figures 1 to 8. The following text will describe in detail the embodiments of the application in conjunction with Figures 9 to 10. Please note that the description of the method embodiments corresponds to the description of the device embodiments; therefore, parts not described in detail can be referred to in the preceding method embodiments.

Figure 9 is a schematic diagram of the communication device applying an embodiment of the application. The device 900 can be any of the first devices described above. The device 900 illustrated in Figure 9 comprises a receiving unit 910, a selecting unit 920, and a sending unit 930.

The receiving unit 910 is used to receive the multiple first messages. The multiple first messages correspond to multiple activation time which is the activation time of multiple second devices.

The selecting unit 920 is used to select the target activation time from multiple activation time.

The sending unit 930 is used for sending lateral data on the time frequency resource within the target activation time.

In some embodiments, the target activation time is determined based on the number of available resources included in the activation time.

In some embodiments, the target activation time is the activation time with the highest number of available resources among the multiple activation time.

In some embodiments, the device 900 further comprises a sensing unit for sensing the time frequency resources within the target activation time to determine the target time frequency resource. The sending unit 930 is specifically used to send the lateral data on the target time frequency resource.

In some embodiments, the target activation time is selected from among multiple activation times.

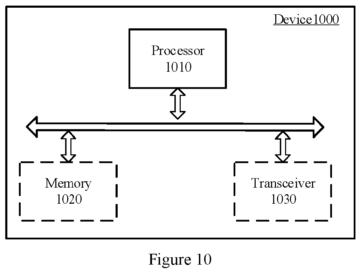

Figure 10 is a schematic structure diagram of a communication device provided in an embodiment of the application. The dashed line in Figure 10 indicates that the unit or module is optional. The device 1000 can be used to implement the methods described in the above method embodiments. Device 1000 can be a chip or terminal device. For example, device 1000 can be the first device described above.

Device 1000 may comprise one or more processors 1010. The processor 1010 can support device 1000 to implement the methods described in the previous method embodiments. Processor 1010 can be a general-purpose processor or a dedicated processor. For example, the processor can be a central processing unit (CPU). Alternatively, the mentioned processors can also be other general-purpose processors, digital signal processors (DSPs), application-specific integrated circuits (ASICs), field-programmable gate arrays (FPGAs), or other programmable logic devices, discrete gates, transistor logic devices, or discrete hardware components. The general-purpose processor can be a microprocessor or any conventional processor.

Device 1000 may also comprise one or more memories 1020. A program is stored on memory 1020, which can be executed by processor 1010 to execute the method described in the previous method embodiment. Memory 1020 can be independent of processor 1010 or integrated into processor 1010.

The device 1000 may also comprise a transceiver 1030. Processor 1010 can communicate with other devices or chips through transceiver 1030. For example, processor 1010 can send and receive data with other devices or chips through transceiver 1030.

The embodiment of the application also provides a computer readable storage medium for storing computer programs. The computer-readable storage medium can be applied to the terminal or network device provided in the embodiments of the application, and the program enables the computer to execute the methods executed by the terminal or network device in each embodiment of the application.

The embodiment of the application also provides a computer program. The computer program product includes a program. The computer program product can be applied to the terminal or network device provided in the embodiments of the application, and the program enables the computer to execute the methods executed by the terminal or network device in each embodiment of the application.

The embodiment of the application also provides a computer program. The computer program can be applied to the terminal or network device provided in the embodiments of the application, and the computer program enables the computer to execute the methods executed by the terminal or network device in each embodiment of the application.

The terms "system" and "network" in the application may be used interchangeably. In addition, the terms used in the application are only for the purpose of explaining specific embodiments of the application, but are not intended to limit the application. The terms "first," "second," "third" and "fourth" in the specification, claims and drawings of the application are used to distinguish different objects, rather than to describe a specific order. The terms "comprise" and "include," along with any variations thereof, are intended to encompass non-exclusive inclusions.

In the embodiments of the application, the term "indicate" can refer to direct indication, indirect indication, or a related relationship. For example, A indicates B may mean that A directly indicates B, for example, B can be obtained through A. It can also mean that A indirectly indicates B, for example, A indicates C, and B can be obtained through C. It can also indicate a related relationship between A and B.

In the embodiments of the application, the term "correspond" may indicate a direct or indirect correspondence between two entities, a related relationship between them, or a relationship involving indicating and being indicated, configuring and being configured, etc.

In the embodiments of the application, "predefine" or "preconfigure" can be achieved by pre-saving corresponding codes, tables, or other means used to indicate relevant information in the device (such as the terminal device and network device). The specific implementation method is not limited in the application. For example, the predefined one can refer to those defined in the protocol.

In the embodiments of the application, the "protocol" may refer to standard protocols in the communication field, such as LTE protocol, NR protocol, and related protocols applied in future communication systems, which are not limited by the application.

In the embodiments of the application, determining B based on A does not mean determining B solely based on A, but B can also be determined based on A and/or other information.

"And / or" in the embodiments of the application only describe the association relationship of the associated objects, indicating that there can be three relationships, for example, A and / or B means A alone, A and B at the same time or B alone. In addition, the character "/" generally indicates that the front and rear associated objects are in an "or" relationship.

In the embodiments of the application, the order of sequence numbers of the above processes does not imply the order of execution. The execution order of each process should be determined by its function and internal logic, and should not constitute any limitation on the implementation process of any embodiment of the application.

In the embodiments provided in the application, it should be understood that the disclosed systems, devices and methods can be implemented in other ways. For example, the device embodiments described above are only illustrative, e.g, the division of units is only a logical function division, and there may be other division methods in actual execution, such as multiple units or components can be combined or integrated into another system, or some features can be ignored or not executed. In addition, the mutual coupling or direct coupling or communication connection which is displayed or discussed can be achieved through the indirect coupling or communication connection of some interfaces, devices or units, which can be in electrical, mechanical or other forms.

The units described as separate components may or may not be physically separated. The components displayed as units may or may not be physical units. They could be located in one place or distributed across multiple network units. Some or all units can be selected according to actual needs to achieve the purpose of the embodiment.

In addition, all functional units in each embodiment of the application can be integrated into one processing unit, or can exist physically separately. It can also be two or more units integrated into one unit.

The above embodiments can be fully or partially implemented through software, hardware, firmware or any combination thereof. When the software is used for execution, it can be fully or partially executed in the form of the omputer program product. The computer program product includes one or more computer instructions. When the computer program instructions are loaded and executed on the computer, it generates all or part of the processes or functions according to the embodiments of the application. The computer can be a general-purpose computer, a specialized computer, a computer network or any other programmable device. The computer instructions can be stored in the computer-readable storage medium, or transmitted from one computer-readable storage medium to another, for example, the computer instructions can be transmitted from a website, computer, server or data center to another website, computer, server or data center through wired (such as coaxial cable, fiber optic, digital subscriber line (DSL)) or wireless (such as infrared, wireless, microwave, etc.) methods. The computer-readable storage medium can be any available medium that the computer can read, or it can be a data storage device such as a server, data center, etc., that integrates one or more available media. The available media can include magnetic media (such as floppy disks, hard drives, and magnetic tapes), optical media (such as digital video discs (DVDs)), or semiconductor media (such as solid-state disks (SSDs)), among others.

The above content is only the specific implementation method of the application, but the scope of protection of the application is not limited by it. Any technical personnel familiar with the technical field within the disclosed technical scope of the application can easily make changes or replacements, which should be covered within the scope of protection of the application. Therefore, the scope of protection of the application shall be based on the scope of protection of the claims.

**Claims**

1. A method for wireless communication, **characterized by** comprising the following steps:

> The first device receives multiple first messages. These multiple first messages correspond to the activation times of multiple second devices;
> The first device selects the target activation time from multiple activation times;
> The first device sends lateral data on the time frequency resources within the target activation time.

2. A method according to claim 1, **characterized in that** the target activation time is determined based on the number of available resources included in the activation time.

3. A method according to claim 1 or claim 2, **characterized in that** the target activation time is the activation time with the highest number of available resources among the multiple activation time.

4. A method according to claim 1 to 3, **characterized by** including the following steps:

> The first device senses the time frequency resources within the target activation time to determine the target time frequency resources;
> The first device sends lateral data on the time frequency resources within the target activation time, which includes the following steps:
> The first device sends lateral data on the target time frequency resource.

5. A method according to any one of claims 1 to 4, **characterized in that** the target activation time is one of the multiple activation time.

6. A wireless communication device, **characterized in that** the device is the first device, comprising the following:

> The receiving unit for receiving multiple first messages, wherein the multiple first messages correspond to multiple activation times of multiple second devices;
> The selecting unit is used to select the target activation time from multiple activation time;

The sending unit is used for sending lateral data on the time frequency resource within the target activation time.

7. A device according to claim 6, **characterized in that** the target activation time is determined based on the number of available resources included in the activation time.

8. A method according to claim 6 or claim 7, **characterized in that** the target activation time is the activation time with the highest number of available resources among the multiple activation time.

9. A device according to any one of claims 6 to 8, **characterized by** comprising the following:

   a sensing unit, which is used to sense the time frequency resources within the target activation time to determine the target time frequency resources;
   The sending unit is specifically used for:
   sending the lateral data on the target time frequency resource.

10. A device according to any one of claims 6 to 9, **characterized in that** the target activation time is one of the multiple activation times.
    11,

11. A device for communication, **characterized by** comprising a memory and a processor, wherein the memory is used to store a program, and the processor is used to call the program in the memory to execute the method as described in any one of claims 1 to 5.

12. A communication device, **characterized by** comprising a processor for calling the program from the memory to execute the method as described in any one of claims 1 to 5.

13. A chip, **characterized by** comprising a processor for calling the program from the memory to enable the device equipped with the chip to execute the method as described in any one of claims 1 to 5.

14. A computer-readable storage medium, **characterized by** storing a program which enables the computer to execute the method as described in any one of claims 1 to 5.

15. A computer program product, **characterized by** including a program which enables the computer to execute the method as described in any one of claims 1 to 5.

16. A computer program, **characterized in that** the computer program enables the computer to execute the method as described in any one of claims 1 to 5.

Figure 1

Figure 2

Periodical partial sensing occasions

Selection
window

1    2    3    4    5

X

$t_{y0}-3\times P1$    $t_{y0}-2\times P2$    $t_{y0}-2\times P1$    $t_{y0}-1\times P2$    $t_{y0}-1\times P1$    $t_{y0}$

Figure 3

Periodical partial sensing occasions

1    2    3    4    5

GPS sensing
window

Y

$t_{y0}-3\times P1$    $t_{y0}-2\times P2$    $t_{y0}-2\times P1$    $t_{y0}-1\times P2$    $t_{y0}-1\times P1$    $t_{y0}$

Figure 4

Activation
time

non-activation
time

DRX period

Figure 5

Device1

Device2

Device3

Device4

Time

⊞ Activation time of device 1

▨ Activation time of device 2

▤ Activation time of device 3

▨ Activation time of device 4

Figure 6

S710

The first device receives a plurality of first messages

S720

The first device selects the target activation time from a plurality of activation times

S730

The first device sends lateral data on the time frequency resources within the target activation time.

Figure 7

Device 1

Device 2

Device 3

Target time frequency resource

Device 4

5-1

Time

Latest sending time

Activation time of device 1

Activation time of device 2

Activation time of device 3

Activation time of device 4

Figure 8

Device900

Receiving unit910

Selecting unit920

Sending unit930

Figure 9

Figure 10

## INTERNATIONAL SEARCH REPORT

International application No.

**PCT/CN2022/087088**

### A. CLASSIFICATION OF SUBJECT MATTER

H04W 76/27(2018.01)i;  H04W 76/28(2018.01)i

According to International Patent Classification (IPC) or to both national classification and IPC

### B. FIELDS SEARCHED

Minimum documentation searched (classification system followed by classification symbols)

H04W76/-

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 百度学术, BAIDU SCHOLAR: DRX, 非持续, 不持续, 非连续, 不连续, 时间, 时段, 时频, 激活, 唤醒, 活动, 苏醒, 活跃, UE, 设备, 终端, 多个, 至少一个, 至少两个, 至少二个, 数, 量, 最多, 最大, 资源 VEN; WOTXT; EPTXT; USTXT; IEEE; 3GPP: activ+, DRX, work+, wake up, wake-up, awak+, resource, availab+, target+, object+.

### C. DOCUMENTS CONSIDERED TO BE RELEVANT

| Category* | Citation of document, with indication, where appropriate, of the relevant passages | Relevant to claim No. |
|---|---|---|
| X | CN 114126092 A (HUAWEI TECHNOLOGIES CO., LTD.) 01 March 2022 (2022-03-01) claims 1-27, and description, paragraphs [0173]-[0460] | 1-16 |
| A | CN 105379406 A (HUAWEI TECHNOLOGIES CO., LTD.) 02 March 2016 (2016-03-02) entire document | 1-16 |
| A | CN 114286310 A (HUAWEI TECHNOLOGIES CO., LTD.) 05 April 2022 (2022-04-05) entire document | 1-16 |
| A | CN 112771969 A (BEIJING XIAOMI MOBILE SOFTWARE CO., LTD.) 07 May 2021 (2021-05-07) entire document | 1-16 |
| A | CN 113260089 A (ALCATEL-LUCENT SHANGHAI BELL CO., LTD. et al.) 13 August 2021 (2021-08-13) entire document | 1-16 |
| A | US 2022039035 A1 (MEDIATEK SINGAPORE PTE. LTD.) 03 February 2022 (2022-02-03) entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 January 2023** | **19 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/087088**

| Patent document cited in search report | | | Publication date (day/month/year) | Patent family member(s) | | | Publication date (day/month/year) |
|---|---|---|---|---|---|---|---|
| CN | 114126092 | A | 01 March 2022 | WO | 2022042705 | A1 | 03 March 2022 |
| CN | 105379406 | A | 02 March 2016 | WO | 2015176251 | A1 | 26 November 2015 |
| | | | | CN | 105379406 | B | 06 December 2019 |
| CN | 114286310 | A | 05 April 2022 | WO | 2022062973 | A1 | 31 March 2022 |
| CN | 112771969 | A | 07 May 2021 | WO | 2022133935 | A1 | 30 June 2022 |
| CN | 113260089 | A | 13 August 2021 | WO | 2021159352 | A1 | 19 August 2021 |
| US | 2022039035 | A1 | 03 February 2022 | TW | 202207725 | A | 16 February 2022 |
| | | | | CN | 114071409 | A | 18 February 2022 |
| | | | | WO | 2022027189 | A1 | 10 February 2022 |

Form PCT/ISA/210 (patent family annex) (January 2015)